# FASCICULE DE BREVET EUROPEEN

(11) **EP 1 053 937 B1**
(45) Date de publication et mention de la délivrance du brevet: **05.01.2005**
(21) Numéro de dépôt: 00401311.6
(22) Date de dépôt: 15.05.2000
(51) Int. Cl.: B64D 27/26

(54) **Dispositif de montage sur un mât d'un ensemble propulsif d'aéronef**
Aufhängungsvorrichtung für ein Antriebsaggregat an einer Triebwerksgondel
Mounting device for an aircraft propulsion unit on an engine pylon

(30) Priorité: 17.05.1999 FR 9906216
(43) Date de publication de la demande: 22.11.2000
(73) Titulaire: AIRBUS France, 31060 Toulouse (FR)
(72) Inventeur: Jule, Pascal, 31170 Tournefeuille (FR); Porte, Alain, 31770 Colomiers (FR); Levert, Stéphane, 31200 Toulouse (FR)
(74) Mandataire: Poulin, Gérard

(56) Documents cités:
- EP-A- 0 741 074
- EP-A- 0 805 108
- US-A- 4 458 863

## Description

### Domaine technique

L'invention concerne un dispositif de montage par lequel un ensemble propulsif d'aéronef, comprenant un moteur et une nacelle, est relié à un mât fixé à un élément de structure de l'aéronef tel qu'un élément de voilure ou de fuselage.

L'invention concerne également un mât d'accrochage apte à supporter un ensemble propulsif d'aéronef au travers d'un tel dispositif de montage.

Le dispositif de montage et le mât conformes à l'invention peuvent être utilisés sur tout type d'avion. Une application privilégiée concerne les avions de construction récente, dont les moteurs sont équipés de soufflantes de très grand diamètre.

### Etat de la technique

Sur un aéronef, le mât constitue l'interface de liaison entre l'ensemble propulsif, incluant le moteur et la nacelle, et la voilure ou le fuselage de l'avion. Il permet de transmettre à la structure de l'avion les efforts générés par le réacteur (fonction de structure). Il permet également d'assurer le cheminement du carburant, de l'électricité (commande et puissance), de l'hydraulique et de l'air entre l'ensemble propulsif et l'avion (fonction de système). En plus de ces deux fonctions, le mât doit respecter différentes contraintes telles que l'obtention d'une sécurité maximale, avec une traînée aérodynamique, une masse et un coût aussi faibles que possible.

Afin d'assurer la transmission des efforts, le mât comprend une structure primaire, dotée d'une ossature, par exemple en forme de caisson. Dans ce cas, cette ossature comprend des nervures et des panneaux, ainsi que des attaches au travers desquelles le mât est relié d'une part à la structure de l'avion et d'autre part à l'ensemble propulsif.

Le mât comprend également une structure secondaire, qui assure la ségrégation et le maintien des systèmes tout en supportant les carénages aérodynamiques.

Pour pouvoir assurer la transmission des efforts entre l'ensemble propulsif et la structure de l'avion, les attaches interposées entre le mât et l'ensemble propulsif sont toujours ancrées au moins en partie sur le carter central. Par conséquent, le mât pénètre dans le canal d'écoulement secondaire formé entre ce carter central et la nacelle qui l'entoure. Afin de perturber le moins possible l'écoulement de l'air dans ce canal secondaire, la partie avant du mât doit donc être la plus étroite possible.

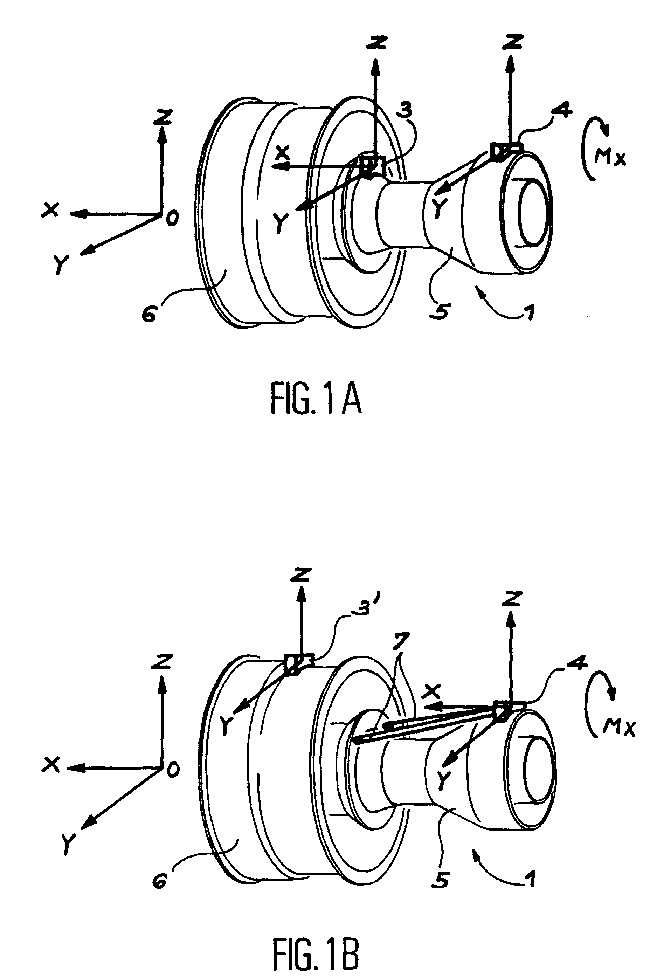

Comme on l'a illustré de façon très schématique sur les figures 1A et 1B des dessins annexés, il existe actuellement deux types principaux de dispositifs de montage d'un ensemble propulsif 1 sur un mât (non représenté) fixé à un élément de structure d'un avion.

Un premier type de dispositifs de montage connus, illustré sur la figure 1A est généralement appelé "montage core". Ce montage se caractérise par l'utilisation d'une attache avant 3 et d'une attache arrière 4, reliant directement le mât au carter central 5. L'attache avant 3 relie le mât à une partie avant du carter central 5, située juste derrière le carter de soufflante 6. Cette partie avant du carter central 5 constitue habituellement le carter du compresseur haute pression du moteur. L'attache arrière 4 est interposée entre le mât et l'arrière du carter central 5.

Pour faciliter la compréhension, on affecte à l'ensemble propulsif 1 un repère orthonormé OXYZ. Dans ce repère, l'axe longitudinal OX coïncide avec l'axe longitudinal de l'ensemble propulsif 1 et il est orienté vers l'avant. L'axe latéral OY est perpendiculaire à l'axe OX ainsi qu'au plan médian du mât (ce dernier plan étant vertical ou perpendiculaire à l'intrados de la voilure lorsque le moteur est suspendu à la voilure, comme représenté). Enfin, l'axe OZ est perpendiculaire aux axes OX et OY, c'est-à-dire vertical dans le mode de réalisation représenté. L'axe OZ est orienté du moteur vers le mât, c'est-à-dire vers le haut. Dans le cas d'un moteur accroché latéralement sur le fuselage d'un avion, l'axe OY serait orienté vers le bas et l'axe OZ situé dans un plan sensiblement horizontal. Toutefois, les axes OY et OZ seront appelés respectivement "axe latéral" et "axe vertical" dans l'ensemble du texte.

Dans un montage de type "core", tel qu'illustré sur la figure 1A, l'attache avant 3 assure la transmission des efforts exercés entre le carter central 5 du moteur et le mât selon des directions longitudinale X, latérale Y et verticale Z (dans le cas représenté d'un ensemble propulsif sous voilure) par rapport à l'ensemble propulsif 1.

Pour sa part, l'attache arrière 4 assure la transmission des efforts exercés entre le carter central 5 du moteur et le mât selon des directions latérale Y et verticale Z, ainsi que la transmission du moment Mₓ selon l'axe longitudinal OX.

Dans le deuxième type de montage classique illustré sur la figure 1B, généralement appelé "montage fan hybride", la liaison entre l'ensemble propulseur 1 et le mât est également assurée par une attache avant 3' et une attache arrière 4 (voir aussi les documents EP-A-0 741 074 et EP-A-O 805 108).

L'attache avant 3' est interposée entre le mât et le carter de soufflante 6 de l'ensemble propulseur 1. Elle assure la transmission des efforts selon la direction latérale Y et selon la direction verticale Z par rapport à l'ensemble propulseur 1.

Comme dans le montage de type "core", l'attache arrière 4 est interposée entre le mât et la partie arrière du carter central 5. Cette attache arrière 4 assure la transmission des efforts exercés entre le carter central 5 du moteur et le mât selon les directions latérale Y et verticale Z par rapport à l'ensemble propulsif 1, ainsi que la transmission des moments M_{X} selon l'axe longitudinal OX. De plus, deux bielles 7 reliant l'attache arrière 4 à la partie avant du carter central 5 permettent à l'attache arrière 4 de transmettre également les efforts exercés entre le carter central 5 du moteur et le mât selon la direction longitudinale X.

Afin de rendre les moteurs d'avions plus économiques, les motoristes cherchent à accroître leur taux de dilution. Cela les conduit notamment à augmenter le diamètre de la soufflante, généralement située à l'avant de l'ensemble propulsif.

Toutefois, cette augmentation de la taille des moteurs engendre de multiples problèmes en liaison avec les dispositifs de montage existants.

Ainsi, lorsqu'on utilise un dispositif de montage de type "core" tel qu'illustré sur la figure 1A, la différence de diamètre entre le carter de soufflante et le carter central du moteur accroît des phénomènes de flexion du moteur particulièrement sensibles avec ce type de montage. En particulier, dans certaines conditions de vol et notamment au décollage, l'appui aérodynamique sur l'entrée d'air, transmis sur l'avant de la soufflante du moteur, provoque une flexion importante de celui-ci entre ses deux attaches 3 et 4. Pour éviter le frottement des pales tournantes de la soufflante sur le carter de soufflante 6 et le frottement des pales tournantes de compresseur et de turbine sur le carter central du moteur, un jeu doit donc être prévu entre le bout des différentes pales et les carters correspondants. Ces jeux sont d'autant plus élevés que le taux de dilution des moteurs s'accroît. Dans d'autres conditions de vol et notamment en phase de croisière, le moteur retrouve sa déformée normale. Il existe donc alors un jeu en bout de pales d'autant plus important que le taux de dilution est grand. Le rendement global du moteur s'en trouve diminué.

Lorsque la liaison entre l'ensemble propulsif et le mât est assurée par un dispositif de montage de type "fan hybride", tel qu'illustré sur la figure 1B, l'accroissement du diamètre de la soufflante augmente des problèmes de résonance de l'avion particulièrement sensibles avec ce type de montage. En effet, ce montage se caractérise par le fait que l'ensemble constitué par le mât et par le moteur se comporte comme un pendule incluant une masse (le moteur) pendu à une voilure par un ressort (le mât). Dans certaines conditions de vol, la voilure excite le pendule ainsi constitué. Pour résoudre ce problème, il n'est pas acceptable d'augmenter la masse pendue. Il faut donc augmenter la raideur du mât en augmentant l'épaisseur de certains des éléments qui le constituent. Ce phénomène existe aussi lorsqu'on utilise des dispositifs de montage de type "core", le montage de type "fan hybride" est plus pénalisant car il nécessite un accroissement de masse plus important pour obtenir une même augmentation de la raideur du mât. Ce problème s'accentue lorsqu'on augmente la taille des moteurs. Pour l'éviter, il faudrait rigidifier le mât en augmentant ses dimensions extérieures. Toutefois, cela signifierait une augmentation notable de la largeur du mât, de sa masse, de son coût et de la traînée aérodynamique, ce qui n'est évidemment pas souhaitable.

Le document US-A-4 458 863 montre un montage de type « fan hybride » comparable à celui de la figure 1B, dans lequel chacune des bielles 7 comprend deux tronçons reliés l'un à l'autre par une articulation qui est reliée au mât par une biellette supplémentaire.

### Exposé de l'invention

L'invention a précisément pour objet un dispositif de montage d'un ensemble propulsif sur un mât fixé à un élément de structure d'un aéronef, dont la conception originale lui permet de mieux répartir les efforts transmis au travers du mât, pour s'affranchir des problèmes engendrés par l'augmentation de taille et de masse des moteurs.

L'invention a également pour objet un dispositif de montage dont la conception originale lui permet de réduire la flexion du moteur dans les phases de vol critiques telles que le décollage, de façon à optimiser les performances du moteur en croisière.

L'invention a encore pour objet un dispositif de montage permettant de garantir une bonne rigidité verticale et latérale du montage sans augmenter les dimensions du mât, de façon à éliminer les problèmes de vibration et de mise en résonance de l'avion sans accroître ni la masse, ni le coût, ni la traînée aérodynamique.

Conformément à l'invention, ces résultats sont obtenus au moyen d'un dispositif de montage conforme à la revendication 1.

L'utilisation d'au moins trois attaches non alignées, pour assurer la transmission des efforts exercés entre le moteur et le mât, permet de diminuer considérablement l'effet de pendule et la mise en résonance de l'avion qui en résulte. Cette amélioration est d'autant plus sensible que le diamètre de la soufflante augmente.

Par ailleurs, du fait que les efforts exercés entre le moteur et le mât sont transmis à celui-ci en au moins trois points au lieu de deux, les phénomènes de flexion du moteur et des liaisons moteur-avion sont fortement réduits.

En outre, l'ajout d'au moins une attache supplémentaire entre le moteur et le mât permet de mieux répartir les efforts qui doivent être transmis à ce dernier.

Ici comme dans l'ensemble du texte, l'adverbe "normalement" signifie "dans des conditions normales de vol", par opposition à des conditions particulières telles que la cassure d'une pièce, un atterrissage sans roues, etc..

Par ailleurs, l'expression "des efforts exercés principalement selon une direction" signifie ici comme dans l'ensemble du texte, que les efforts ainsi transférés du moteur au mât ne sont pas nécessairement orientés parfaitement selon ladite direction. Ainsi, dans le cas de la direction Z, ces efforts peuvent être exercés selon une direction Z' inclinée de quelques degrés, par exemple dans le plan OXZ, pour réduire au minimum la contribution des efforts exercés dans cette direction à la flexion du moteur.

Dans le mode de réalisation préféré de l'invention, la première attache avant est normalement apte à transférer des efforts exercés principalement selon une direction Y latérale par rapport au moteur, et le système d'attache arrière est normalement apte à transférer des efforts exercés selon la direction Z orientée radialement du moteur vers le mât et selon la direction latérale Y, ainsi qu'un moment selon l'axe longitudinal OX du moteur.

Dans ce cas, la transmission des efforts de poussée selon une direction X, longitudinale par rapport au moteur, peut se faire normalement soit au travers de la première attache avant, soit au travers du système d'attache arrière, soit au travers d'une quatrième attache interposée entre le carter central du moteur et le mât, et affectée à cette fonction.

La deuxième attache avant est reliée au carter de soufflante dans une zone structurale de celui-ci, apte à transmettre les efforts. De même, la première attache avant et le système d'attache arrière sont reliées au carter central du moteur dans des zones structurales de ce carter, aptes à transmettre les efforts. Dans le cas de la deuxième attache avant, ladite zone structurale du carter de soufflante peut notamment être reliée structurellement au carter central du moteur par des aubes fixes.

L'invention a également pour objet un mât d'accrochage d'un ensemble propulsif à un élément de structure d'aéronef, apte à supporter l'ensemble propulsif par un dispositif de montage tel que défini précédemment, dans lequel l'ossature du mât comprend une partie principale dont une interface est apte à être reliée au carter de moteur par la première attache avant et par le système d'attache arrière, l'ossature du mât comprenant de plus une partie avant en saillie par rapport à la partie principale, en un emplacement éloigné vers l'extérieur de l'ensemble propulsif par rapport à ladite interface, ladite partie avant en saillie étant apte à être reliée au carter de soufflante par la deuxième attache avant.

### Brève description des dessins

On décrira à présent, à titre d'exemples non limitatifs, différents modes de réalisation préférés de l'invention, en se référant aux dessins annexés, dans lesquels :
- la figure 1A, déjà décrite, représente schématiquement, en perspective, un ensemble propulsif doté d'un dispositif de montage de type "core" ;
- la figure 1B, déjà décrite, représente schématiquement et en perspective un ensemble propulsif doté d'un dispositif de montage de type "fan hybride" ;
- la figure 2 est une vue en perspective représentant un ensemble propulsif relié à un mât par un dispositif de montage illustrant un premier mode de réalisation de l'invention ;
- la figure 3 est une vue comparable à la figure 2, illustrant un autre mode de réalisation de l'invention ; et
- les figures 4 à 6 sont des vues comparables aux figures 2 et 3, illustrant des variantes de réalisation du mât selon l'invention.

### Description détaillée de plusieurs modes de réalisation préférés de l'invention

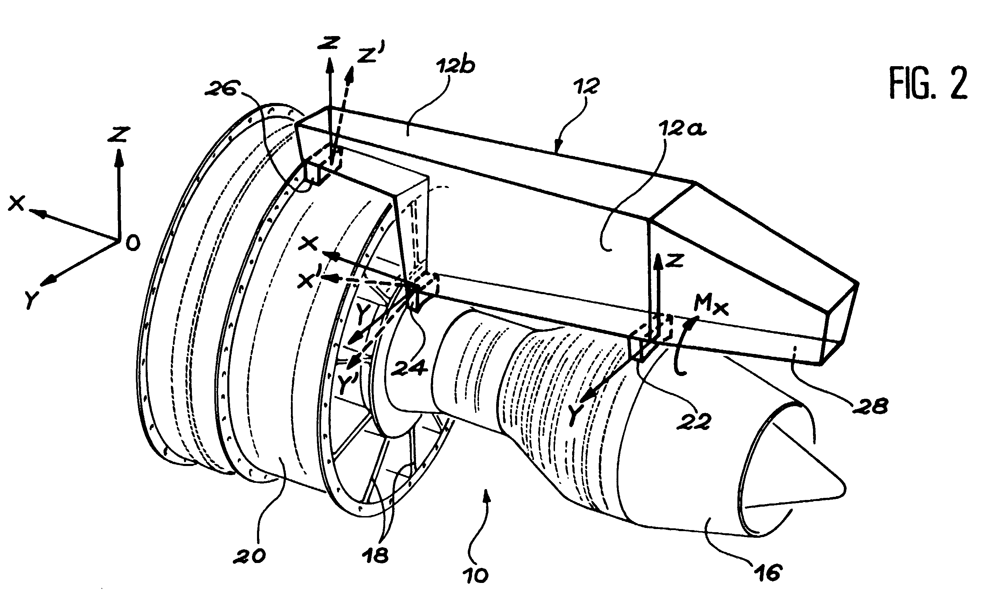

Sur la figure 2, on a représenté un ensemble propulsif 10 suspendu à une voilure (non représentée) d'un avion, par un mât d'accrochage. Il est à noter qu'en variante, le mât peut également être utilisé pour relier l'ensemble propulsif 10 à un autre élément de structure d'aéronef tel qu'un élément de fuselage. Les orientations des efforts sont alors modifiées en conséquence.

L'ensemble propulsif 10 comprend un moteur incluant un carter central 16 ainsi qu'une nacelle (non représentée) entourant coaxialement le carter central 16. Des pales fixes 18 relient une partie avant du carter central 16 du moteur à un carter de soufflante 20 complétant l'enveloppe intérieure de la nacelle autour d'une soufflante (non représentée) située à l'avant du moteur.

Par ailleurs, on n'a représenté sur la figure 2 que l'ossature 12 du mât d'accrochage destiné à relier l'ensemble propulsif 10 à la voilure de l'avion. Le carénage aérodynamique et les structures servant au support des différents systèmes qui cheminent dans le mât n'ont pas été illustrés.

Conformément à l'invention, l'ensemble propulsif 10 est relié à l'ossature 12 du mât par un dispositif de montage comprenant au moins une attache arrière 22, une première attache avant 24 et une deuxième attache avant 26.

Plus précisément, l'ossature 12 du mât forme dans ce cas une structure caissonnée qui comprend une partie principale 12a, ainsi qu'une partie avant 12b. La partie avant 12b fait saillie vers l'avant du moteur, par rapport à la partie principale 12a de l'ossature.

La partie principale 12a de l'ossature 12 du mât comprend une interface 28, orientée vers le bas dans le mode de réalisation décrit appliqué à l'accrochage d'un moteur sous la voilure d'un avion. Cette interface 28 est reliée au carter central 16 du moteur par l'attache arrière 22 ainsi que par la première attache avant 24, dans des zones structurales du carter central 16 aptes à transmettre les efforts et placées respectivement à l'arrière et à l'avant de ce carter central.

La partie avant 12b en saillie de l'ossature 12 du mât est située en un emplacement éloigné vers l'extérieur de l'ensemble propulsif 10 par rapport à l'interface 28. Elle est reliée au carter de soufflante 20 par la deuxième attache avant 26. Plus précisément, cette liaison est située de préférence dans une zone du carter de soufflante 20 reliée structurellement au carter central 16 par les aubes fixes 18. En variante, la deuxième attache avant 26 peut aussi être raccordée au carter de soufflante 20 dans une autre partie de celui-ci, suffisamment rigide pour assurer la transmission des efforts.

Dans le repère OXYZ défini précédemment, la deuxième attache avant 26 est conçue de façon à n'assurer normalement, entre le carter de soufflante 20 et l'ossature 12 du mât, que le transfert des efforts exercés principalement selon l'axe Z. A cet effet, cette attache 26 peut notamment être constituée par un système de bielles avec palonnier ou par tout système équivalent, apte à remplir la même fonction.

Plus précisément, et comme on l'a illustré sur la figure 2, les efforts transmis à l'ossature 12 du moteur au travers de l'attache 26 peuvent être soit orientés selon l'axe OZ, soit orienté selon une direction Z', inclinée de quelques degrés par rapport à l'axe OZ. En d'autres termes, la direction des efforts transmis à l'ossature 12 du mât au travers de la deuxième attache avant 26 comprend une composante principale orientée selon l'axe OZ.

Dans le premier mode de réalisation de l'invention, illustré sur la figure 2, la première attache avant 24 peut ainsi être simplifiée, par rapport à l'attache de type "core" de façon à ne transférer normalement, entre le carter central 16 du moteur et l'ossature 12 du mât, que des efforts exercés principalement selon les directions X et Y. En d'autres termes, la première attache avant 24 transfère alors à l'ossature 12 du mât des efforts orientés selon une direction X' contenue dans le plan XOZ et incluant une composante principale orientée selon l'axe OX, et des efforts orientés selon une direction Y' contenue dans le plan YOZ et incluant une composante principale orientée selon l'axe OY. Cette fonction peut notamment être obtenue en réalisant l'attache 24 sous la forme d'un doigt rotulé dans le carter central 16, ou au moyen de tout mécanisme équivalent, apte à remplir la même fonction.

Comme dans les dispositifs de montage de type "core", l'attache arrière 22 est alors conçue de façon à transférer normalement, entre le carter central 16 du moteur et l'ossature 12 du mât, des efforts exercés selon les directions Y et Z ainsi que des moments Mₓ exercés selon l'axe OX. L'attache 22 peut donc être réalisée de la même manière que dans les dispositifs de montage de type "core" existants.

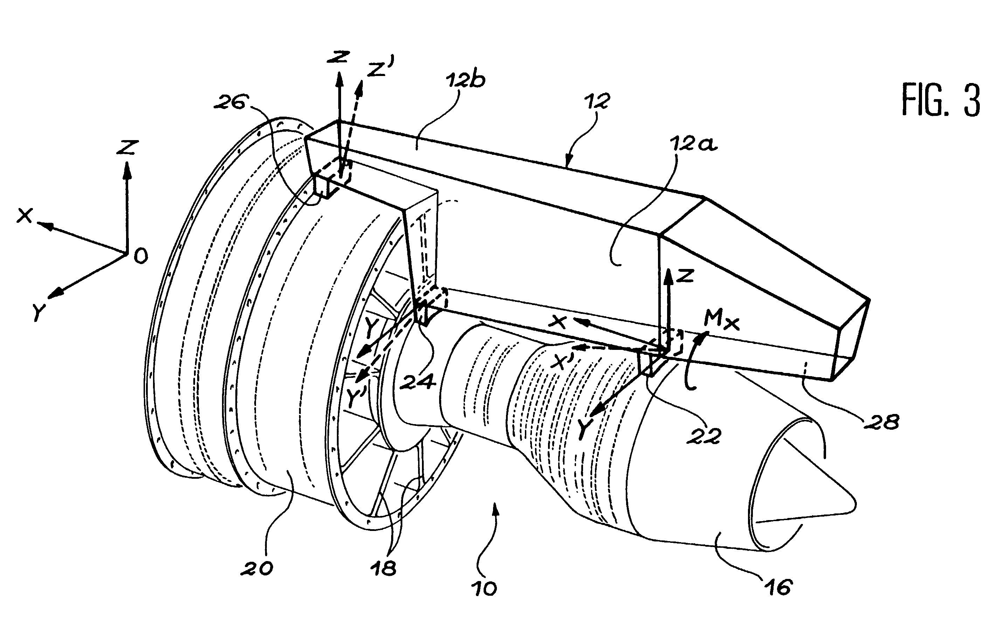

Dans le deuxième mode de réalisation de l'invention, illustré sur la figure 3, la fonction de la deuxième attache avant 26 est inchangée, par rapport au premier mode de réalisation qui vient d'être décrit. En revanche, au lieu d'être transmis à l'ossature 12 du mât au travers de la première attache avant 24, les efforts de poussée exercés principalement selon la direction X sont transmis dans ce cas au travers de l'attache arrière 22.

Ainsi, la première attache avant 24 peut encore être simplifiée, de façon à ne transférer normalement, entre le carter central 16 du moteur et l'ossature 12 du mât, que des efforts exercés principalement selon la direction Y, c'est-à-dire des efforts exercés selon une direction Y' contenue dans le plan YOZ incluant une composante principale orientée selon l'axe OY. Cette fonction peut notamment être obtenue en réalisant l'attache 24 sous la forme d'une bielle reliant une chape solidaire du carter central 16 à une chape apte à être fixée à l'ossature du mât, ou au moyen de tout mécanisme équivalent, apte à remplir la même fonction.

Comme dans les dispositifs de montage de type "fan hybride", l'attache arrière 22 est alors conçue de façon à transférer normalement, entre le carter central 16 du moteur et l'ossature 12 du mât, des efforts exercés selon les directions latérale Y et verticale Z, par rapport au carter central 16, ainsi que les moments Mₓ selon l'axe OX. De plus, deux bielles (non représentées) relient l'attache arrière 22 à la partie avant du carter central 16 du moteur, pour permettre à l'attache arrière 22 de reprendre les efforts exercés principalement selon la direction X, c'est-à-dire selon une direction X' contenue dans le plan XOZ et incluant une composante principale orientée selon l'axe OX.

Dans un autre mode de réalisation (non représenté), les efforts exercés principalement selon la direction X ne sont repris ni par la première attache avant 24, ni par l'attache arrière 22, mais par une quatrième attache reliant le carter central 16 du moteur à l'ossature 12 du mât. Cette quatrième attache peut être placée entre les attaches 22 et 24, derrière la première attache avant 24 ou devant l'attache arrière 22, à un niveau identique ou différent de celles-ci.

Grâce à l'agencement selon l'invention, le point de reprise d'efforts selon la direction Z', à l'avant du moteur, est déplacé sur le carter de soufflante 20 par rapport aux dispositifs connus de type "core". Cette caractéristique permet d'obtenir une meilleure répartition des efforts. En effet, le point de reprise des efforts selon la direction Z' se trouvant plus près de l'entrée d'air du moteur, il est plus facile de contrer la force exercée par l'air sur l'avant de la nacelle selon cette direction Z'. La contribution de cette force à la flexion du moteur est donc réduite.

En outre, la reprise de l'effort selon la direction Z' par l'attache 26 permet de soulager l'attache 24. En effet, celle-ci n'a plus à reprendre que les efforts selon la direction Y, et éventuellement selon la direction X, en conditions normales.

En ce qui concerne l'ossature 12 du mât, le point d'attache de sa partie avant 12b est renforcé pour reprendre, sans déformation ou cassure du carter de soufflante, l'effort selon la direction Z. C'est pourquoi l'attache 26 est située dans une zone structurale renforcée du carter de soufflante 20, telle que la zone où le carter de soufflante 20 est relié structurellement au carter de moteur 16 par les aubes fixes 18.

Par ailleurs, le point d'attache de la partie principale 12a sur l'avant du carter de moteur 16, au travers de l'attache 24, est comparable à celui que l'on trouve dans un dispositif de montage de type "core". A cet effet, la structure caissonnée de l'ossature 12 se prolonge vers l'avant jusqu'à l'attache 24. Comme on l'a déjà observé, l'agencement selon l'invention permet de simplifier cette attache 24, qui ne reprend plus les efforts que selon deux directions au lieu de trois dans les dispositifs de type "core". Il est à noter que l'attache 24 peut toutefois être conçue pour reprendre d'autres efforts dans des conditions particulières (pièces cassées, chemin secondaire, atterrissage sans roue, etc.).

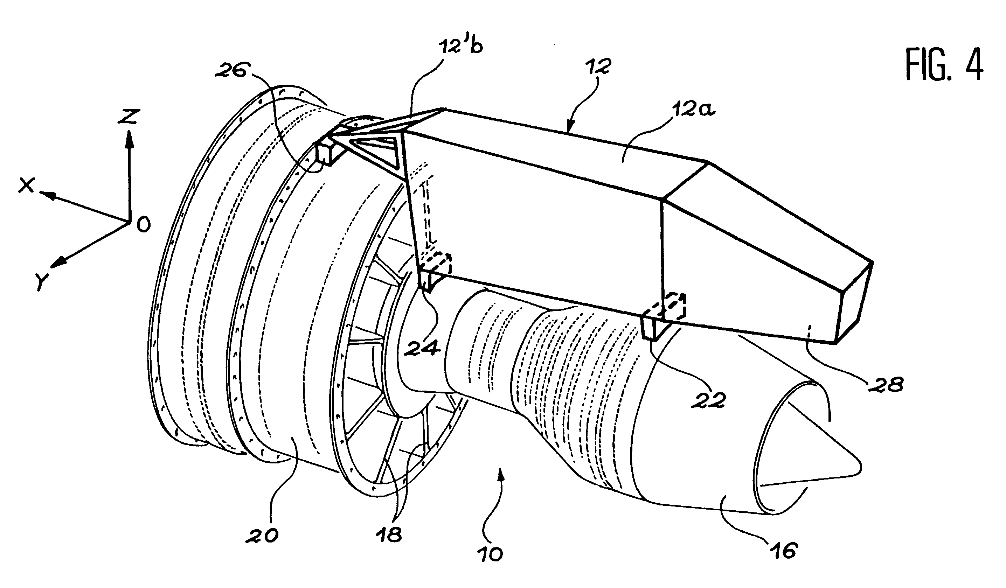

Dans les modes de réalisation illustrés schématiquement sur les figures 2 et 3, l'ossature 12 du mât est réalisée intégralement sous la forme d'une structure caissonnée. Toute autre réalisation de l'ossature 12 apte à transmettre les efforts à la structure de l'avion peut toutefois être envisagée, comme l'illustrent à titre d'exemples les figures 4 à 6.

Ainsi, la figure 4 illustre le cas où la partie principale 12a de l'ossature 12 est réalisée sous la forme d'une structure caissonnée, alors que la partie avant 12'b est une structure en pyramide, formée de quatre bras reliant l'attache 26 à la partie principale 12a.

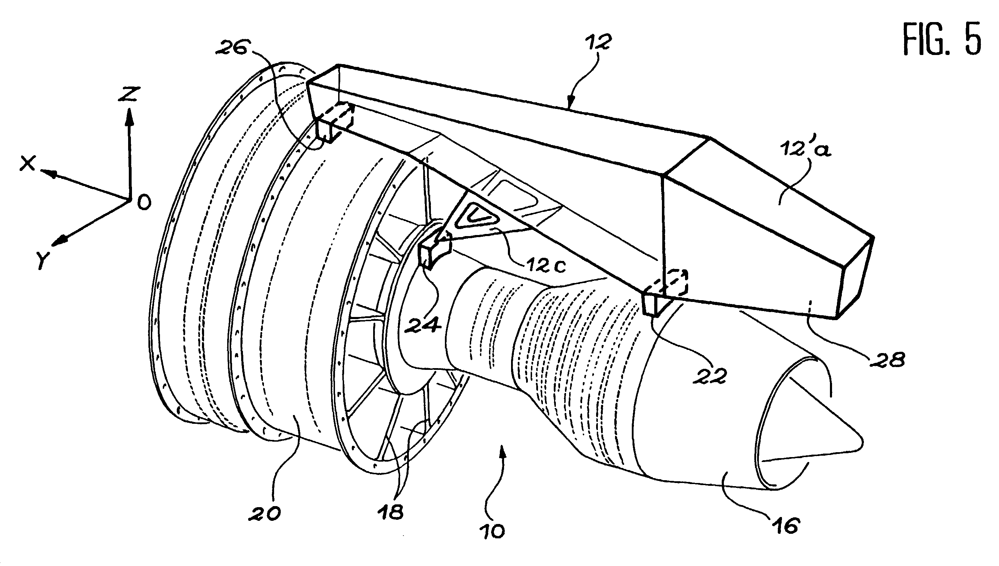

Dans le cas de la figure 5, une partie principale caissonnée 12'a de l'ossature 12 du mât, reliée respectivement au carter de soufflante 20 et au carter central 16 du moteur par les attaches 26 et 22, est complétée par une structure en pyramide 12c, reliant la partie principale 12a à l'attache 24.

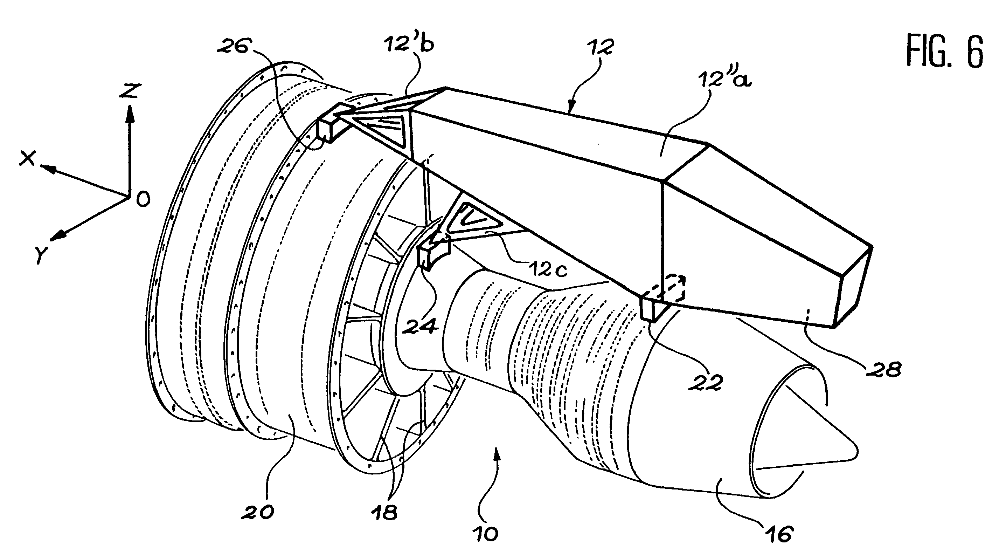

Enfin, sur la figure 6, on a illustré le cas où le mât comprend une partie principale caissonnée 12"a, une structure avant 12'b en pyramide reliant l'attache 26 à la partie 12"a, et une autre structure 12c en pyramide, reliant l'attache 24 à la partie 12"a.

Toute autre structure (treillis, etc.) peut être adoptée pour l'ossature 12 du mât, sans sortir du cadre de l'invention.

En conclusion, l'agencement selon l'invention permet une meilleur répartition des efforts et évite les problèmes connus des agencements classiques. Il permet aussi de simplifier les attaches en réduisant le nombre d'efforts à prendre en compte.

Comme on l'a déjà observé, l'attache arrière peut être réalisée de la même manière que dans les montages existants (par exemple, de type "core"). En variante, elle peut aussi être réalisée sous la forme d'un système d'attache dans lequel les fonctions de reprise des efforts exercés selon les directions Y et Z ainsi que les moments Mₓ exercés selon l'axe OX sont dissociées, sans sortir du cadre de l'invention.

Enfin, il est à noter que l'invention peut être appliquée indifféremment sur un mât dont l'ossature en forme de caisson présente une section trapézoïdale ou rectangulaire.

## Revendications

1. Dispositif de montage d'un ensemble propulsif (10) d'aéronef sur un mât (12) fixé à un élément de structure de l'aéronef, l'ensemble propulsif (10) comprenant un moteur doté d'un carter central (16) et d'un carter de soufflante (20), le dispositif incluant une première attache avant (24) reliant un premier point d'attache du mât (12) à une partie avant du carter central (16) au moins une deuxième attache avant (26) reliant un troisième point d'attache du mât (12) au carter de soufflante (20) et un système d'attache arrière (22) reliant un deuxième point d'attache du mât (12) à une partie arrière du carter central (16) du moteur, le deuxième point d'attache étant décalé vers l'arrière par rapport au premier point d'attache,
**caractérisé en ce que** la deuxième attache avant (26) est normalement apte à transférer des efforts exercés principalement selon une direction (Z) orientée radialement du moteur vers le mât (12).

2. Dispositif selon la revendication 1, dans lequel la première attache avant (24) est normalement apte à transférer des efforts exercés principalement selon une direction (Y) latérale par rapport au moteur et le système d'attache arrière (22) est normalement apte à transférer des efforts exercés selon ladite direction (Z) orientée radialement et selon la direction latérale (Y), ainsi qu'un moment (Mₓ) selon un axe longitudinal (OX) du moteur.

3. Dispositif selon la revendication 2, dans lequel la première attache avant (24) est aussi normalement apte à transférer des efforts exercés principalement selon une direction longitudinale (X) par rapport au moteur.

4. Dispositif selon la revendication 2, dans lequel le système d'attache arrière (22) est aussi normalement apte à transférer des efforts exercés principalement selon une direction longitudinale (X) par rapport au moteur.

5. Dispositif selon la revendication 2, dans lequel une quatrième attache, normalement apte à transférer des efforts exercés principalement selon une direction longitudinale (X) par rapport au moteur, relie également le carter central (16) du moteur au mât (12).

6. Dispositif selon l'une quelconque des revendications précédentes, dans lequel la deuxième attache avant (26) est reliée à une zone structurale du carter de soufflante (20) apte à transmettre lesdits efforts et la première attache avant (24) et le système d'attache arrière (22) sont reliées à des zones structurales du carter central (16) du moteur, aptes à transmettre lesdits efforts.

7. Mât d'accrochage d'un ensemble propulsif (10) à un élément de structure d'aéronef, apte à supporter l'ensemble propulsif par un dispositif de montage selon l'une quelconque des revendications précédentes, dans lequel l'ossature (12) du mât comprend une partie principale (12a) dont une interface (28) est apte à être reliée au carter de moteur (16) par la première attache avant (24) et par le système d'attache arrière (22), l'ossature (12) du mât comprenant de plus une partie avant (12b) en saillie par rapport à la partie principale (12a), en un emplacement éloigné vers l'extérieur de l'ensemble propulsif (10) par rapport à ladite interface (28), ladite partie avant (12b) en saillie étant apte à être reliée au carter de soufflante (20) par la deuxième attache avant (26).

## Patentansprüche

1. Vorrichtung zur Montage einer Antriebseinheit (10) eines Luftfahrzeugs an einem Mast (12), der an einem Strukturelement des Luftfahrzeugs befestigt ist, wobei die Antriebseinheit (10) einen Motor umfasst, der mit einem Zentralgehäuse (16) und einem Gebläsegehäuse (20) ausgestattet ist, wobei die Vorrichtung eine erste vordere Befestigung (24) umfasst, die einen ersten Befestigungspunkt des Masts (12) mit einem vorderen Bereich des Zentralgehäuses (16) verbindet, wobei wenigstens eine zweite vordere Befestigung (26) einen dritten Befestigungspunkt des Masts (12) mit dem Gebläsegehäuse (20) verbindet, und ein hinteres Befestigungssystem (22) einen zweiten Befestigungspunkt des Masts (12) mit einem hinteren Bereich des Zentralgehäuses (16) des Motors verbindet, wobei der zweite Befestigungspunkt bezüglich des ersten Befestigungspunkts nach hinten versetzt ist, **dadurch gekennzeichnet, dass** die zweite vordere Befestigung (26) im Normalzustand dazu ausgelegt ist, Kräfte zu übertragen, die hauptsächlich in einer Richtung (Z) ausgeübt werden, die radial vom Motor zum Mast (12) hin orientiert ist.

2. Vorrichtung nach Anspruch 1, bei der die erste vordere Befestigung (24) im Normalzustand dazu ausgelegt ist, Kräfte zu übertragen, die hauptsächlich in einer bezüglich des Motors seitlichen Richtung (Y) ausgeübt werden, und das hintere Befestigungssystem (22) im Normalzustand dazu ausgelegt ist, Kräfte zu übertragen, die in der radial orientierten Richtung (Z) und in der seitlichen Richtung (Y) ausgeübt werden, ebenso wie ein Moment (Mₓ) entlang einer Längsachse (OX) des Motors.

3. Vorrichtung nach Anspruch 2, bei der die erste vordere Befestigung (24) femer im Normalzustand dazu ausgelegt ist, Kräfte zu übertragen, die hauptsächlich in einer Längsrichtung (X) bezüglich des Motors ausgeübt werden.

4. Vorrichtung nach Anspruch 2, bei der das hintere Befestigungssystem (22) ferner im Normalzustand dazu ausgelegt ist, Kräfte zu übertragen, die hauptsächlich in einer Längsrichtung (X) bezüglich des Motors ausgeübt werden.

5. Vorrichtung nach Anspruch 2, bei der eine vierte Befestigung, die im Normalzustand dazu ausgelegt ist, Kräfte zu übertragen, die hauptsächlich in einer Längsrichtung (X) bezüglich des Motors ausgeübt werden, ebenfalls das Zentralgehäuse (16) des Motors mit dem Mast (12) verbindet.

6. Vorrichtung nach einem der vorhergehenden Ansprüche, bei der die zweite vordere Befestigung (26) mit einer Strukturzone des Gebläsegehäuses (20) verbunden ist, die dazu ausgelegt ist, die Kräfte zu übertragen, und die erste vordere Befestigung (24) sowie das hintere Befestigungssystem (22) mit Strukturzonen des Zentralgehäuses (16) des Motors verbunden sind, die dazu ausgelegt sind, die Kräfte zu übertragen.

7. Mast zur Aufhängung einer Antriebseinheit (10) an einem Strukturelement eines Luftfahrzeugs, der dazu ausgelegt ist, die Antriebseinheit mittels einer Montagevorrichtung nach einem der vorhergehenden Ansprüche zu tragen, bei dem das Gerüst (12) des Masts einen Hauptbereich (12a) mit einer Verbindungsstelle (28) umfasst, die dazu ausgelegt ist, mittels der ersten vorderen Befestigung (24) und mittels des hinteren Befestigungssystems (22) mit dem Motorgehäuse (16) verbunden zu sein, wobei das Gerüst (12) des Masts ferner einen Vorderbereich (12b) umfasst, der bezüglich des Hauptbereichs (12a) an einer Stelle vorsteht, die bezüglich der Verbindungsstelle (28) zur Außenseite der Antriebseinheit (10) hin entfernt ist, wobei der vorstehende Vorderbereich (12b) dazu ausgelegt ist, mittels der zweiten vorderen Befestigung (26) mit dem Gebläsegehäuse (20) verbunden zu sein.

## Claims

1. Device for fixing an aircraft propulsion system (10) to a strut (12) fixed to a structural element of the aircraft, the propulsion system (10) comprising a motor equipped with a central casing (16) and a fan stator case (20), said device including a first front mount (24) linking a first mounting point of the strut (12) to a front part of the central casing (16), at least one second front mount (26) linking a third mounting point of the strut (12) to the fan stator case (20) and a rear mount system (22) linking a second mounting point of the strut (12) to a rear part of the central casing (16) of the engine, the second mounting point being rearwardly displaced with respect to the first mounting point, **characterized in that** the second front mount (26) is normally able to transfer forces mainly exerted in a direction (Z) from the engine to the strut (12).

2. Device according to claim 1, wherein the first front mount (24) is normally able to transfer forces mainly exerted in a lateral direction (Y) with respect to the engine and the rear mount system (22) is normally able to transfer forces exerted in said radially oriented direction (Z) and in the lateral direction (Y), as well as a moment (Mx) in accordance with a longitudinal axis (OX) of the engine.

3. Device according to claim 2, wherein the first front mount (24) is also normally able to transfer forces exerted mainly in a longitudinal direction (X) with respect to the engine.

4. Device according to claim 2, wherein the rear mount system (22) is also normally able to transfer forces exerted mainly in a longitudinal direction (X) relative to the engine.

5. Device according to claim 2, wherein a fourth mount, normally able to transfer forces exerted mainly in a longitudinal direction (X) with respect to the engine also links the central casing (16) of the engine to the strut (12).

6. Device according to any one of the preceding claims, wherein the second front mount (26) is connected to a structural zone of the fan stator case (20) able to transmit said forces and the first front mount (24) and the rear mount system (22) are connected to structural zones of the central casing (16) of the engine able to transmit said forces.

7. Strut for attaching a propulsion system (10) to an aircraft structural element able to support the propulsion system by a fixing device according to any one of the preceding claims, wherein the strut frame (12) comprises a main part (12a), whereof an interface (28) can be connected to the engine casing (16) by the first front mount (24) and by the rear mount system (22), the strut frame (12) also comprising a front part (12b) projecting with respect to the main part (12a), at a location displaced towards the exterior of the propulsion system (10) with respect to said interface (28), said front, projecting part (12b) being connectable to the fan stator case (20) by the second front mount (26).
